# FASCICULE DE BREVET EUROPEEN

(11) **EP 0 652 502 B1**
(45) Date de publication et mention de la délivrance du brevet: **24.02.1999**
(21) Numéro de dépôt: 94460040.2
(22) Date de dépôt: 08.11.1994
(51) Int. Cl.: G05D 23/19

(54) **Appareil de commande programmable d'une installation de chauffage**
Programmierbares Steuergerät für Heizungsanlage
Programmable control apparatus of a heating installation

(30) Priorité: 09.11.1993 FR 9313609
(43) Date de publication de la demande: 10.05.1995
(73) Titulaire: DELTA DORE Société Anonyme, F-35270 Combourg (FR)
(72) Inventeur: Raffray, Patrick, F-35120 Hirel (FR); Roger, Alain, F-35270 Cuguen (FR)
(74) Mandataire: Maillet, Alain

(56) Documents cités:
- EP-A- 0 121 200
- EP-A- 0 493 366
- DE-A- 2 900 627
- GB-A- 2 052 100
- GB-A- 2 052 800
- GB-A- 2 213 610
- US-A- 5 156 203
- PATENT ABSTRACTS OF JAPAN vol. 4 no. 161 (M-040) ,11 Novembre 1980 & JP-A-55 110834 (SANYO ELECTRIC CO LTD) 26 Août 1980,

## Description

La présente invention concerne un appareil de commande programmable d'une installation de chauffage.

On connaît déjà de tels appareils. Ils sont généralement constitués d'une unité de traitement à laquelle sont reliées une ou plusieurs sondes de température pour déterminer la température d'une ou plusieurs zones de l'installation de chauffage et des organes de commande d'un ou plusieurs appareils de chauffage se trouvant dans lesdites zones. Un clavier, ou tout autre dispositif d'entrée/sortie, permet de programmer l'unité de traitement, c'est-à-dire d'affecter, pour chaque zone, une température de consigne à une période horaire de la journée, ceci, par exemple, pour chaque jour de la semaine.

Les données engendrées par le clavier ou par le dispositif d'entrée/sortie, au moment de la programmation, sont stockées dans la mémoire de l'unité de traitement et forment, ce qu'on appellera dans la suite de la présente description, des données de programmation.

Prévoir l'opération de programmation de ce type d'appareil est délicate. En effet, ou le nombre de fonctionnalités est relativement important et l'appareil est long et fastidieux à programmer ou, au contraire, l'appareil est simple à programmer et le nombre de fonctionnalités est relativement restreint.

Le but de l'invention est de prévoir un appareil qui permette une opération de programmation selon plusieurs modes, chacun desdits modes s'adaptant au choix de programmer ou pas, fait par l'utilisateur.

Un autre inconvénient des appareils connus se trouve dans le fait que les données de programmation peuvent être modifiées par quiconque et notamment par des personnes qui ne connaissent pas le fonctionnement de l'appareil, comme des enfants. Il s'ensuit un risque d'erreurs de fonctionnement.

Un autre but de l'invention est de prévoir un appareil qui pallie un tel inconvénient.

Les buts sus-mentionnés sont atteints en produisant un appareil dont les données de programmation utilisées par l'unité de traitement sont, soit des données de programmation lues dans la mémoire d'une carte, du type dite carte à puce, lorsqu'une telle carte est introduite dans un lecteur dudit appareil, soit des données de programmation résidant dans ladite unité de traitement lorsqu'aucune carte n'est introduite dans ledit lecteur, lesdites données de programmation résidantes ne pouvant être modifiées que si une carte, dite carte clef, est introduite dans le lecteur.

Selon une autre caractéristique de l'invention, il peut fonctionner dans un mode où les données de programmation contenues dans la mémoire d'une carte introduite dans le lecteur sont chargées dans l'unité de traitement afin de les rendre résidantes.

Selon une autre caractéristique de l'invention, il peut fonctionner dans un mode où les données de programmation résidantes sont transférées dans la mémoire de la carte introduite dans le lecteur.

Selon une autre caractéristique de l'invention, les mémoires des cartes qui contiennent des données de programmation contiennent également des données qui les identifient en tant que carte de programme.

Selon une autre caractéristique de l'invention, les mémoires des cartes dites cartes clefs contiennent un code les identifiant en tant que cartes clefs.

Selon une autre caractéristique de l'invention, les mémoires des cartes dites cartes clefs contiennent un code d'identification de l'utilisateur.

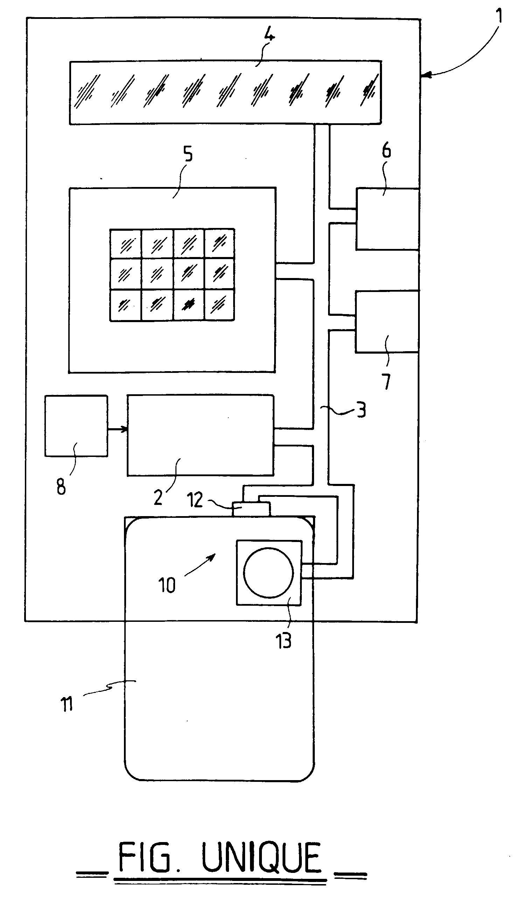

Les caractéristiques de l'invention mentionnées ci-dessus, ainsi que d'autres, apparaîtront plus clairement à la lecture de la description suivante d'un exemple de réalisation, ladite description étant faite en relation avec le dessin joint dont la Fig. unique est une vue schématique et synoptique d'un appareil de commande programmable selon l'invention.

L'appareil représenté à la Fig. unique comprend monté, dans un unique boîtier 1, une unité de traitement 2, par exemple du type à microprocesseur ou à microcontrôleur, comportant un bus 3 auquel sont reliés un dispositif de visualisation d'informations 4, tel qu'un écran du type à cristaux liquides ou autre, un clavier 5, une interface d'entrée 6 prévue pour recevoir les signaux de mesure d'une ou plusieurs sondes de température (non représentées) et une interface de commande 7 à laquelle est relié au moins un organe de commande d'un ou plusieurs appareils de chauffage (non représentés) installés pour le chauffage de locaux.

Il comporte encore une horloge 8 qui, dans le mode de réalisation représenté, est directement reliée à l'unité de traitement 2.

Le fonctionnement de l'appareil tel qu'il est décrit jusqu'ici est le suivant.

L'horloge 8 transmet à l'unité de traitement 2 des signaux de temps que l'unité de traitement 2 utilise pour définir des plages horaires et pour commander, via l'interface de commande 7, à l'intérieur de chaque plage horaire ainsi définie, l'organe de commande d'un appareil de chauffage afin que celui-ci fonctionne, par exemple, soit en mode dit confort, soit en mode dit économique.

En mode confort, la commande de l'appareil de chauffage est prévue pour avoir une température dans les locaux qui donne une sensation de confort. En mode économique, la commande de l'appareil de chauffage est prévue pour avoir une température inférieure à la température précédente. Entre ces deux modes, d'autres modes peuvent être prévus, tels que des modes intermédiaires qui peuvent être déterminés en fonction d'autres paramètres extérieurs que la température, par exemple le coût de l'électricité, etc. Enfin, d'autres modes encore peuvent être prévus tels que des modes hors-gel ou un mode d'arrêt.

Pour effectuer les commandes de l'appareil de chauffage telles qu'elles viennent d'être décrites, l'unité 2 contient des données de programmation qui sont alors dites résidantes. Ces données sont prévues pour permettre à un programme également contenu dans l'unité 2 d'être exécuté en fonction desdites données. Ces données de programmation définissent par exemple les plages horaires et les modes de fonctionnement de l'appareil de chauffage, mode confort, mode économique, modes intermédiaires, ou autres modes qu'il faut commander dans chacune des plages horaires ainsi définies.

L'unité 2, en fonction du mode sélectionné, effectue la commande mentionnée ci-dessus en fonction des signaux de température délivrés sur l'interface d'entrée 6.

On notera cependant qu'il est possible de ne relier aucune sonde de température à l'interface 6. Dans ce cas, l'appareil de l'invention agit comme un programmateur horaire.

On notera que, dans des modes de réalisation particuliers, l'interface d'entrée 6 n'existe pas. Dans ce cas également, l'appareil de l'invention agit comme un programmateur horaire.

Pendant le fonctionnement de l'appareil, des informations sur les conditions de fonctionnement sont affichées sur le dispositif 4. Il peut s'agir de données horaires, de température de régulation et/ou de tout autre information utile à l'utilisateur.

L'appareil de l'invention comporte encore un lecteur 10 de cartes 11, dites "cartes à puces". De telles cartes sont constituées d'un support plat rectangulaire, généralement en matière plastique, sur lequel est monté un circuit électronique, généralement une mémoire de type EEPROM, ainsi que son système de connexion.

Le lecteur 10 de l'appareil de l'invention comporte un dispositif de validation 12 et un connecteur 13 qui est prévu pour coopérer avec le connecteur de toute carte introduite dans le lecteur 10. Le connecteur 13 est relié au bus 3 de l'unité de traitement 2.

L'appareil de l'invention fonctionne de la manière suivante.

Dans un premier mode, dit mode 0, aucune carte n'est introduite dans le lecteur 10. L'appareil fonctionne comme précédemment, c'est-à-dire que l'unité de traitement 2 pilote l'interface 7 selon les signaux de température présents sur l'interface 6 et selon des données de programmation résidant dans l'unité 2. Dans ce mode également, la partie du clavier 5 qui concerne les données de programmation est désactivée si bien qu'il n'est pas possible de modifier les données de programmation résidantes. Dans ce mode, le clavier 5 permet d'atteindre des fonctionnalités de lecture des données de programmation ou des fonctionnalités de forçage manuel du fonctionnement de l'appareil dans un de ces modes de fonctionnement.

Dans un second mode, dit mode 1, une carte 11, dite carte clef, est introduite dans le lecteur 10.

La carte 11 introduite ne comporte pas de mémoire ou, si elle comporte une mémoire, celle-ci contient, soit un code spécifique au mode 1 de fonctionnement qui l'identifie en tant que carte clef, soit un code d'identification de l'utilisateur.

Lors de son introduction, la carte 11 vient en butée contre le dispositif de validation 12 qui envoie un signal à l'unité de traitement 2, laquelle active alors le clavier 5. La modification des données de programmation résidantes est alors possible, ceci au moyen du clavier 5 et du dispositif de visualisation 4. Une fois la carte 11 retirée du lecteur 10, l'appareil fonctionne dans le mode 0 avec les données de programmation résidantes telles que modifiées.

Dans le cas où la carte 11 introduite comporte un code spécifique du mode 1 ou un code d'identification de l'utilisateur, l'unité de traitement 2 lit préalablement ce code et vérifie son exactitude. Selon le résultat de cette vérification, l'unité de traitement 2 active ou pas le mode 1 de fonctionnement de l'appareil.

Dans ce mode de fonctionnement, la carte 11 introduite joue le rôle d'une clef pour permettre à l'utilisateur d'avoir accès à la programmation de son appareil. Cette clef est plus ou moins complexe selon que la carte comporte ou ne comporte pas de code d'identification de l'utilisateur. Cette clef, comme toute clef, permet d'interdire la fonction de programmation de l'appareil à ceux qui ne la possèdent pas.

Dans un troisième mode de fonctionnement, dit mode 2, une carte 11 spécifique, dite carte de programme, est introduite. Cette carte spécifique comporte une mémoire dans laquelle sont mémorisés, d'une part, un code qui l'identifie en tant que carte de programme et, d'autre part, des données de programmation spécifiques d'applications particulières. Lorsqu'elle est introduite dans le lecteur 10, la mémoire de la carte 11 est reliée, via le connecteur de la carte et le connecteur complémentaire 12 du lecteur 10, via également le bus 3, à l'unité de traitement 2. Lorsque celle-ci lit le code d'identification de la carte, elle pilote l'interface 7 selon les données de programmation mémorisées dans la mémoire de la carte de programme 11 introduite. Dans ce cas, les données résidantes sont en quelque sorte désactivées.

L'avantage de ce mode réside dans le fait qu'il est possible de disposer de plusieurs cartes pré-programmées pour des applications particulières, par exemple pour des applications qui dépendent de l'occupation des locaux, des températures souhaitées, des plages horaires déterminées, etc.

Dans un quatrième mode de fonctionnement, dit mode 3, une carte de programme 11 est introduite et l'unité de traitement 2 est avertie de ce mode, par exemple par appui sur une touche particulière du clavier 5 ou par appui d'une séquence particulière de touches du clavier 5.

Dans ce mode, les données de programmation stockées dans la mémoire de la carte introduite sont lues et chargées dans l'unité de traitement 2. Ainsi, il est possible de rendre résidantes des données qui étaient jusqu'alors mémorisées dans la mémoire d'une carte, par exemple d'une carte pré-programmée qui convient parfaitement à l'utilisateur.

Dans un cinquième mode de fonctionnement, dit mode 4, une carte de programme 11 est introduite et l'unité de traitement 2 est avertie de ce mode, par exemple par appui sur une touche particulière du clavier 5 ou par appui d'une séquence particulière de touches du clavier 5.

Dans ce mode, les données de programmation résidant dans l'unité de traitement 2 sont chargées dans la mémoire de la carte introduite. Ainsi, il est possible de sauvegarder des données qui ont fait l'objet d'une modification effectuée selon le mode 1.

## Revendications

1. Appareil de commande programmable d'une installation de chauffage du type comprenant une horloge (8) et une unité de traitement (2) prévue pour commander un ou plusieurs appareils de chauffage de ladite installation en fonction de données de programmation, caractérisé en ce que lesdites données de programmation utilisées par ladite unité de traitement sont, soit des données de programmation lues dans la mémoire d'une carte (11), du type dite carte à puce, lorsqu'une telle carte (11) est introduite dans un lecteur (10) dudit appareil, soit des données de programmation résidant dans ladite unité de traitement (2) lorsqu'aucune carte n'est introduite dans ledit lecteur (10), lesdites données de programmation résidantes ne pouvant être modifiées que si une carte (11), dite carte clef, est introduite dans le lecteur (10).

2. Appareil selon la revendication 1, caractérisé en ce qu'il fonctionne dans un mode où les données de programmation contenues dans la mémoire d'une carte introduite dans le lecteur (10) sont chargées dans l'unité de traitement (2) afin de les rendre résidantes.

3. Appareil selon la revendication 1 ou 2, caractérisé en ce qu'il fonctionne dans un mode où les données de programmation résidantes sont transférées dans la mémoire de la carte introduite dans le lecteur (10).

4. Appareil selon une des revendications précédentes, caractérisé en ce que les mémoires des cartes qui contiennent des données de programmation contiennent également des données qui les identifient en tant que carte de programme.

5. Appareil selon une des revendications précédentes, caractérisé en ce que les mémoires des cartes dites cartes clefs contiennent un code les identifiant en tant que cartes clefs.

6. Appareil selon une des revendications précédentes, caractérisé en ce que les mémoires des cartes dites cartes clefs contiennent un code d'identification de l'utilisateur.

## Claims

1. Programmable control apparatus of a heating installation of the type comprising a clock (8) and a processing unit (2) provided for controlling one or more heating devices of the said installation according to programming data, characterised in that the said programming data used by the said processing unit are either programming data read from the memory of a card (11), of the so-called smart card type, when such a card (11) is inserted in a reader (10) of the said apparatus, or programming data resident in the said processing unit (2) when no card is inserted in the said reader (10), the said resident programming data being able to be modified only if a card (11), called a key card, is inserted in the reader (10).

2. Apparatus according to Claim 1, characterised in that it functions in a mode in which the programming data contained in the memory of a card inserted in the reader (10) are loaded into the processing unit (2) in order to make them resident.

3. Apparatus according to Claim 1 or 2, characterised in that it functions in a mode in which the resident programming data are transferred into the memory of the card inserted in the reader (10).

4. Apparatus according to one of the preceding claims, characterised in that the memories of the cards which contain programming data also contain data which identify them as program cards.

5. Apparatus according to one of the preceding claims, characterised in that the memories of the so called key cards contain a code identifying them as key cards.

6. Apparatus according to one of the preceding claims, characterised in that the memories of the co-called key cards contain a code identifying the user.

## Patentansprüche

1. Programmierbares Steuergerät für eine Heizungsanlage mit einem Zeitgeber (8) und eine Verarbeitungseinheit (2), die vorgesehen ist, einen oder mehrere Heizkörper dieser Anlage abhängig von Programmierungsdaten zu steuern, **dadurch gekennzeichnet,** daß die von der Verarbeitungseinheit verwendeten Programmierungsdaten entweder Programmierungsdaten sind, die in dem Speicher einer Karte (11) nach Art einer Chipkarte gelesen werden, wenn eine solche Karte (11) in ein Lesegerät (10) dieses Geräts eingeführt wird, oder Programmierungsdaten, die in der Verarbeitungseinheit (2) resident sind, wenn keine Karte in das Lesegerät (10) eingeführt ist, wobei die residenten Programmierungsdaten nur verändert werden können, wenn eine Karte (11), eine sogenannte Schlüsselkarte, in das Lesegerät (10) eingeführt ist.

2. Gerät nach Anspruch 1, **dadurch gekennzeichnet,** daß es in einer Betriebsart arbeitet, in der die in dem Speicher einer in das Lesegerät (10) eingeführten Karte enthaltenen Programmierungsdaten in die Verarbeitungseinheit (2) geladen werden, wodurch diese resident gemacht werden.

3. Gerät nach Anspruch 1 oder 2, **dadurch gekennzeichnet,** daß es in einer Betriebsart arbeitet, in der die residenten Programmierungsdaten in den Speicher der in das Lesegerät (10) eingeführten Karte übertragen werden.

4. Gerät nach einem der vorstehenden Ansprüch**e, dadurch gekennzeichnet,** daß die Speicher der Karten, welche die Programmierungsdaten enthalten, auch Daten enthalten, die sie als Programmkarte identifizieren.

5. Gerät nach einem der vorstehenden Ansprüche, **dadurch gekennzeichnet,** daß die Speicher der sogenannten Schlüsselkarten einen Code enthalten, der sie als Schlüsselkarten identifiziert.

6. Gerät nach einem der vorstehenden Ansprüche, **dadurch gekennzeichnet,** daß die Speicher der sogenannten Schlüsselkarten einen Benutzer-ldentifikationscode enthalten.
